# EUROPÄISCHE PATENTSCHRIFT

(11) **EP 1 305 541 B1**
(45) Veröffentlichungstag und Bekanntmachung des Hinweises auf die Patenterteilung: **17.03.2004**
(21) Anmeldenummer: 01960585.6
(22) Anmeldetag: 28.07.2001
(51) Int. Cl.: F16H 15/38

(54) **STUFENLOSES REIBRADGETRIEBE**
INFINITELY VARIABLE TOROIDAL DRIVE
ENTRAINEMENT PAR FRICTION CONTINU

(30) Priorität: 04.08.2000 DE 10038225
(43) Veröffentlichungstag der Anmeldung: 02.05.2003
(73) Patentinhaber: ZF FRIEDRICHSHAFEN Aktiengesellschaft, 88038 Friedrichshafen (DE)
(72) Erfinder: SICH, Bernhard, 88045 Friedrichshafen (DE); MATHEIS, Axel, 88605 Sauldorf (DE)
(86) Internationale Anmeldenummer: PCT/EP2001/008771
(87) Internationale Veröffentlichungsnummer: WO 2002/012754

(56) Entgegenhaltungen:
- DE-A- 19 754 725
- DE-A- 19 826 057
- US-A- 4 934 206
- PATENT ABSTRACTS OF JAPAN vol. 2000, no. 04, 31. August 2000 (2000-08-31) -& JP 2000 027963 A (MAZDA MOTOR CORP), 25. Januar 2000 (2000-01-25)
- PATENT ABSTRACTS OF JAPAN vol. 1999, no. 08, 30. Juni 1999 (1999-06-30) -& JP 11 063133 A (NIPPON SEIKO KK), 5. März 1999 (1999-03-05)

## Beschreibung

Die vorliegende Erfindung betrifft ein stufenloses Reibradgetriebe nach dem Oberbegriff des Anspruchs 1.

Ein derartiges stufenloses Reibradgetriebe weist üblicherweise koxial zu einer gemeinsamen Welle angeordnete Eingangs- und Ausgangsscheiben, auf, die paarweise zueinander angeordnet sind und deren Innenflächen toroidförmig ausgestaltet sind, sowie zwischen den Paaren von Eingangsund Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragende Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheiben hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder jeweils an einem Träger gelagert, der über eine Verschwenkeinrichtung ansteuerbar ist.

Ein derartiges stufenloses Reibradgetriebe ist im einzelnen in der DE 197 54 725 der Anmelderin beschrieben. Dieses Getriebe enthält zwei Getriebeeinheiten, die koaxial zur Eingangswelle angeordnet sind, wobei jede Getriebeeinheit eine Eingangsscheibe und eine Ausgangsscheibe aufweist, zwischen denen jeweils zwei Reibräder angeordnet sind und wobei jedes Reibrad an einem schwenkbaren Träger befestigt ist. Sowohl Eingangs- als auch Ausgangsscheiben sind auf einer Drehmomentwelle gelagert, die geringfügig in Axialrichtung relativ zur Eingangswelle verschiebbar ist. Die Eingangsscheibe der einen Getriebeeinheit ist drehfest mit der Drehmomentwelle verbunden, jedoch axial gleitend auf ihr gelagert. Auch die Eingangsscheibe der anderen Getriebeeinheit ist drehfest durch eine Mitnahmeverzahnung mit der Drehmomentwelle verbunden. Die beiden Ausgangsscheiben der beiden Getriebeeinheiten sind spiegelsymmetrisch zueinander und nebeneinander im Getriebe vorgesehen und auf einer gemeinsamen Buchse angeordnet, sodass ein Drehmoment, das von der einen Eingangsscheibe der zugehörigen Ausgangsscheibe und ein Drehmoment, das von der anderen Eingangsscheibe deren zugehörigen Ausgangsscheibe übertragen wird, von den beiden drehfest mit der Buchse verbundenen Ausgangsscheiben einem Zahnrad übertragen wird, welches mit einem Zahnrad einer Ausgangswelle kämmt. Eine rollenförmige Anpreßeinrichtung beaufschlagt eine der Eingangsscheiben, die in Axialrichtung verschiebbar auf der Eingangswelle gelagert sowie drehfest mit ihr verbunden ist.

Bei den bekannten stufenlosen Reibradgetrieben erfolgt üblicherweise die Verstellung der Übersetzung durch Verschiebung der Reibräder tangential zur Getriebeachse, wobei jedoch Schwenkkräfte von den Eingangs- und Ausgangsscheiben auf das dazwischen angeordnete Reibrad einwirken, da letztere zur Momentenübertragung an das Reibrad gepreßt werden müssen. Das Reibrad ist bei den herkömmlichen stufenlosen Reibradgetrieben derart in jeder Getriebeeinheit angeordnet, dass seine Schwenkachse im Mittelpunkt des durch die zugehörigen Eingangs- und Ausgangsscheiben gebildeten Torus angeordnet ist. In den Kontaktpunkten des Reibrades mit der zugehörigen Eingangsscheibe und Ausgangsscheibe werden dabei sogenannte Normalkräfte bei der Verstellung der Übersetzung hervorgerufen.

Um zu verhindern, dass bei ungleichen während der Übersetzungsverstellung auftretenden Normalkräften das am Reibrad auftretende dadurch bedingte Drehmoment eine unerwünschte Veränderung der Übersetzung des Getriebes hervorruft, wurde bereits in der DE 198 26 057 der Anmelderin vorgeschlagen, eine mögliche Differenz der Normalkräfte durch Erzeugung einer Steuerkraft zu kompensieren, wobei bei axial gehaltenem Reibrad diese Steuerkraft, die zur Verdrehung des Reibrades führt, an einer der beiden zugehörigen Scheiben aufgebracht werden kann, während bei axialer Fixierung einer der Scheiben diese Steuerkraft auf das Reibrad einwirkt.

Es wurde auch bereits vorgeschlagen, die Reibräder in einem stufenlosen Reibradgetriebe durch zwei Verbindungsstangen abzustützen, welche den auftretenden Reaktionskräften entgegenwirken. Die Schwenkbewegung der Reibräder wird dabei durch Wälzlager ermöglicht; diese Ausgestaltung bringt jedoch noch den Nachteil eines hohen Gewichtes des Reibradgetriebes sowie einer fehlenden Kopplung der Schwenkbewegungen zweier in einer Getriebeeinheit angeordnete Träger für die Reibräder mit sich.

Aus der gattungsbildenden US 4,934,206 ist ein stufenloses Reibradgetriebe mit zwei Getriebeeinheiten bekannt, wobei in der ersten Getriebeeinheit zwei Träger und zwei Reibräder angeordnet sind und in der zweiten Getriebeeinheit ebenfalls zwei Träger und zwei Reibräder angeordnet sind. Die Träger sind über insgesamt vier umlaufende Riemen miteinander verbunden, wobei jeweils ein Riemen zwei Träger miteinander verbindet, und jeder Riemen die Form einer Acht aufweist, d. h. eine mittig zwischen den beiden durch ihn verbundenen Trägern eine Kreuzungsstelle aufweist. Durch diese Anordnung von Riemen erhält man eine Synchronisierung der Bewegungen der durch die Riemen miteinander verbundenen Träger für die Reibräder. Die Riemen sind an den unteren Enden der Träger in der Nähe der Längsachse des Getriebes angeordnet und dienen ausschließlich der Synchronisierung der zugehörigen Träger. Deren obere Enden sind wie bei den herkömmlichen Reibradgetrieben über Joche, Bügel und Lager an der Innenwand des Getriebegehäuses gelagert. Bei dieser Anordnung, die die Merkmale des Oberbegriffs zeigt, ist ein Zugmittel nur an den unteren Enden vorgesehen.

Aufgabe der vorliegenden Erfindung ist es, ein stufenloses Reibradgetriebe dahingehend auszugestalten, dass durch ein einziges Bauteil sowohl die auf die Reibräder einwirkenden Reaktionskräfte als auch eine Synchronisation der Schwenkbewegungen der zugehörigen Träger bei geringem Bauaufwand ermöglicht wird.

Die Lösung dieser Aufgabe erfolgt mit den im einzigen Patentanspruch angegebenen Merkmalen.

Erfindungsgemäß ist also vorgesehen, dass an den oberen Enden und an den unteren Enden der beiden Träger einer jeden Getriebeeinheit ein Zugmittel vorgesehen ist, das die entsprechenden Enden im wesentlichen kreisförmig umschlingt und das zur Erzeugung einer synchronen gegenläufigen Schwenkbewegung der Träger in Form einer 8 angeordnet ist, mit einer mittig zwischen den beiden Trägern liegenden Kreuzungsstelle.

Dieses Zugmittel, beispielsweise in Form eines Endloskabels weist nur eine geringe Masse auf und erfordert nur einen geringen Bauraum, wodurch der Bauaufwand verringert wird. Gleichzeitig ermöglicht das Zugmittel sowohl die Aufnahme der Reaktionskräfte auf die Reibräder als auch eine Synchronisation der Schwenkwinkel der beiden zugehörigen Träger in jeder Getriebeeinheit.

Im folgenden wird die Erfindung anhand der Zeichnung näher erläutert, in der ein vorteilhaftes Ausführungsbeispiel dargestellt ist.
Es zeigen
- Fig. 1: schmematisch einen Schnitt durch einen Teil einer Getriebeeinheit zur Darstellung der auftretenden Kräfte;
- Fig. 2: einen Radialschnitt durch einen Teil einer Getriebeeinheit und
- Fig. 3: eine Draufsicht auf diese Darstellung von Fig. 2.

Stufenlose Reibradgetriebe sind in ihrem Aufbau und in ihrer Betriebsweise dem Fachmann gut bekannt, sodass im folgenden nur die für das Verständnis der Erfindung notwendigen Bauteile beschrieben und dargestellt sind; gleiche Teile sind in den Figuren mit gleichen Bezugszeichen versehen.

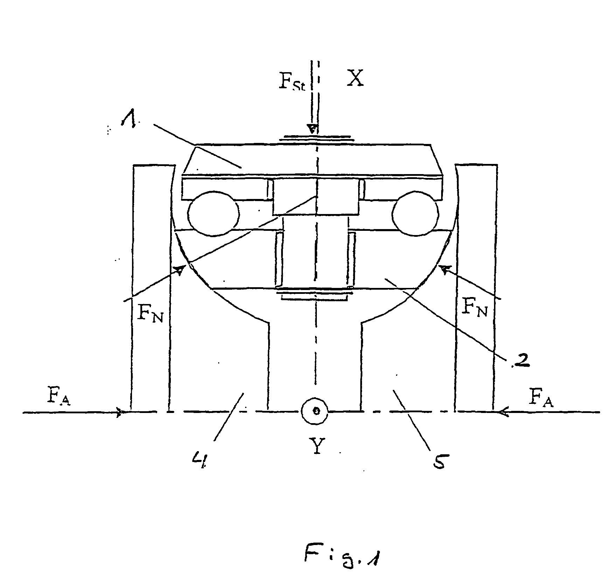

In den Figuren sind mit 1, 1' die Träger, mit 2, 2' die Reibräder, mit 3, 3' die erfindungsgemäßen Zugmittel und mit 4, 5 die Eingangs- bzw. Ausgangsscheiben einer Getriebeeinheit bezeichnet. Wie Figur 1 erkennen läßt, entstehen bei einem derartigen stufenlosen Reibradgetriebe Reaktionskräfte in radialer Richtung durch die Anpressung F_{A} der beiden Scheiben an die Reibräder 2. Um die Reibräder in ihrer vorgesehenen Position halten zu können, müssen diese gegenüber diesen Reaktionskräften abgestützt werden.

Für die Funktion eines stufenlosen Reibradgetriebes mit mehreren Reibrädern ist eine gleichmäßige Verstellung aller Reibräder unabdingbar. Eine Synchronisierung der Schwenkwinkel zweier sich gegenüberliegender Reibräder wirkt sich dadurch in vorteilhafter Weise stabilisierend auf das gesamte Verstellverhalten des Reibradgetriebes aus.

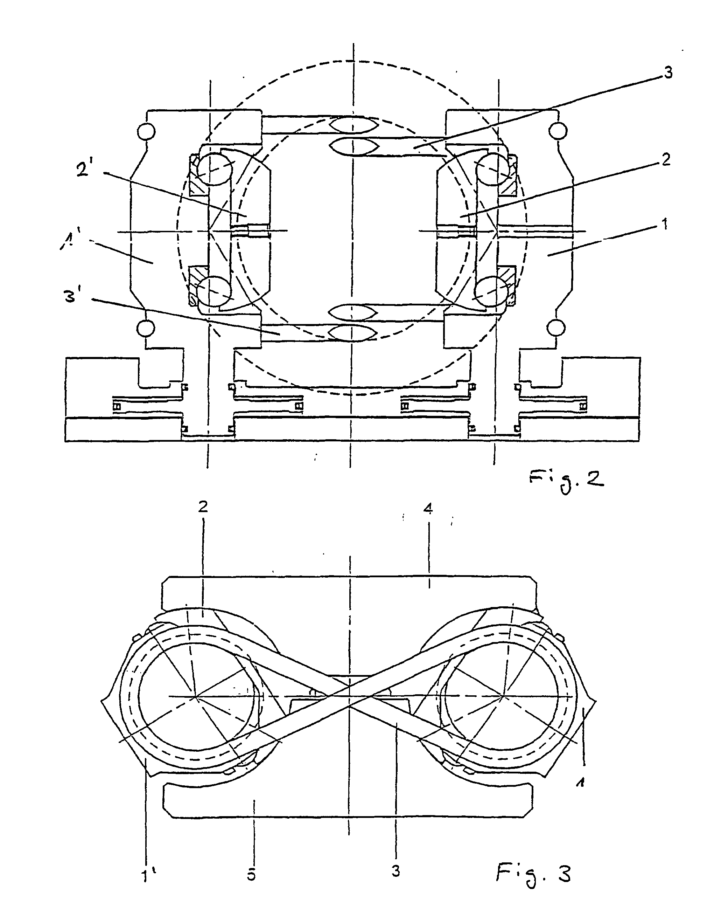

Erfindungsgemäß ist daher vorgesehen, wie es aus Figuren 2 und 3 hervorgeht, sowohl an den oberen Enden als auch an den unteren Enden zweier zu einer Getriebeeinheit gehörender Träger 1, 1' jeweils ein Zugmittel 3, 3' vorzusehen, wobei die beiden Träger 1, 1' von den beiden Zugmitteln 3, 3' jeweils im wesentlichen kreisförmig umschlungen werden (Figur 3). Um die gegenläufige Schwenkbewegung der Träger 1, 1' mit den Reibrädern 2 zu synchronisieren, sind die Zugmittel 3, 3' in Form einer 8 angeordnet, sodass zwischen den beiden Trägern 1, 1' eine Kreuzungsstelle gebildet ist.

Durch die Verwendung von zwei Zugmitteln 3, 3', von denen eines an den beiden unteren, d. h. der Getriebeachse zugewandten Enden der Träger angeordnet ist und das andere an den oberen der Gehäusewand zugewandten Enden der zugehörigen Träger angeordnet ist, können also die beiden Funktionen "Reaktionskraft aufnehmen" und "synchrone Verstellung" gewährleistet werden; dadurch dass die bisher üblichen Bauteile zur Aufnahme der Reaktionskräfte an den oberen Enden der Trägen entfallen wird der Bauaufwand des Getriebes erheblich verringert und damit auch die Herstellungskosten.

### Bezugszeichen

- 1: Träger
- 2: Reibrad
- 3: Zugmittel
- 3': Zugmittel
- 4: Scheibe
- 5: Scheibe

## Patentansprüche

1. Stufenlose Reibradgetriebe mit:
mehreren Getriebeeinheiten, wobei jede Getriebeeinheit eine koaxial zur Eingangswelle vorgesehene Eingangsscheibe (4) mit einer toroidförmigen Innenfläche und eine koaxial zur Eingangswelle angeordnete Ausgangsscheibe (5) mit einer toroidförmigen Innenfläche aufweist, wobei jeweils eine Eingangsscheibe und Ausgangsscheibe ein Paar bilden,
mehreren Reibräder (2), die zwischen den Innenflächen der Paare aus Eingangsscheibe und Ausgangsscheibe verschwenkbar angeordnet sind und jeweils an einem Träger (1) gelagert sind zur Übertragung eines Drehmoments von der Eingangsscheibe auf die zugehörige Ausgangsscheibe durch Verschwenkung der Träger und damit der Reibräder (2),
einer Anpreßeinrichtung für eine der Eingangsscheiben, um diese in Richtung Ausgangsscheibe zu beaufschlagen,
**dadurch gekennzeichnet, dass** an den oberen Enden und an den unteren Enden der Träger (1) einer jeden Getriebeeinheit ein Zugmittel (3, 3') vorgesehen ist, das die entsprechenden Enden der Träger im wesentlichen kreisförmig umschlingt und das zur Erzeugung einer synchronen gegenläufigen Schwenkbewegung der Träger (1, 1') in Form einer 8 angeordnet ist, mit einer mittig zwischen den beiden Trägern (1, 1') liegenden Kreuzungsstelle.

## Claims

1. Infinitely variable friction gear having:
a plurality of gear units, wherein each gear unit comprises an input disk (4) provided coaxially with the input shaft and having a toroidal inner surface as well as an output disk (5) disposed coaxially with the input shaft and having a toroidal inner surface, wherein in each case one input disk and one output disk form a pair,
a plurality of friction wheels (2), which are disposed in a swivelling manner between the inner surfaces of the pairs of input disk and output disk and are mounted in each case on a carrier (1) for transmitting a torque from the input disk to the associated output disk by swivelling the carriers and hence the friction wheels (2),
a pressure-applying device for one of the input disks in order to load said input disk in the direction of the output disk,
**characterized in that** at the lower ends of the carriers (1) of each gear unit a pulling mechanism (3, 3') is provided, which is looped in a substantially circular manner around the ends of the carriers and which for generating a synchronous oppositely directed swivelling movement of the carriers (1, 1') is disposed in the shape of a figure 8, with a crossing point lying midway between the two carriers (1, 1').

## Revendications

1. Transmission à roues de friction variable en continu, comprenant :
plusieurs unités de transmission, chaque unité de transmission ayant une poulie d'entrée (4) prévue coaxialement à l'arbre d'entrée et comportant une surface intérieure toroïdale, et une poulie de sortie (5) disposée coaxialement à l'arbre d'entrée et comportant une surface intérieure toroïdale, une poulie d'entrée et une poulie de sortie formant à chaque fois une paire,
plusieurs roues de friction (2) qui sont disposées mobiles en mouvement de pivotement entre les surfaces intérieures des paires composées d'une poulie d'entrée et d'une poulie de sortie et qui sont tourillonnées chacune sur un support (1), pour transmettre un couple de la poulie d'entrée à la poulie de sortie correspondante par le pivotement des supports et, avec eux, des roues de friction (2),
un dispositif de pression pour une des poulies d'entrée, servant à solliciter cette dernière en direction de la poulie de sortie,
**caractérisée en ce que**, aux extrémités supérieures et aux extrémités inférieures des supports (1) de chaque unité de transmission, est prévu un moyen de traction (3, 3') qui entoure sensiblement en forme de cercle les extrémités correspondantes des supports et qui est disposé en forme de huit, avec un point de croisement situé au milieu entre les deux supports (1, 1') pour produire un mouvement de pivotement des supports (1, 1') en synchronisme et en sens inverse l'un de l'autre.
